# EUROPÄISCHE PATENTSCHRIFT

(11) **EP 0 958 040 B1**
(45) Veröffentlichungstag und Bekanntmachung des Hinweises auf die Patenterteilung: **28.04.2004**
(21) Anmeldenummer: 97906190.0
(22) Anmeldetag: 08.03.1997
(51) Int. Cl.: B01F 15/04, B29B 7/60, B29B 7/76

(54) **VERFAHREN ZUM FÖRDERN VON WERKSTOFFEN UND VORRICHTUNG ZUR DURCHFÜHRUNG DES VERFAHRENS**
PROCESS FOR CONVEYING MATERIALS AND DEVICE FOR IMPLEMENTING IT
PROCEDE POUR LE TRANSPORT DE MATERIAUX ET DISPOSITIF POUR LA MISE EN OEUVRE DE CE PROCEDE

(30) Priorität: 22.03.1996 DE 19611339
(43) Veröffentlichungstag der Anmeldung: 24.11.1999
(73) Patentinhaber: WIWA WILHELM WAGNER GMBH & CO. KG, D-35633 Lahnau (DE)
(72) Erfinder: JERKEL, Rudolf, D-47807 Krefeld (DE)
(74) Vertreter: Böck, Bernhard, Dipl.-Ing.
(86) Internationale Anmeldenummer: PCT/EP1997/001181
(87) Internationale Veröffentlichungsnummer: WO 1997/035659

(56) Entgegenhaltungen:
- EP-A- 0 116 879
- EP-A- 0 644 025
- DE-A- 2 541 656
- DE-A- 2 736 193
- US-A- 4 079 861
- US-A- 4 312 463
- US-A- 4 881 820

## Beschreibung

Die Erfindung betrifft ein Verfahren zum synchronen Fördern von fließfähigen Werkstoffen nach dem Oberbegriff des Anspruches 1. Die Erfindung betrifft weiterhin eine Vorrichtung zur Durchführung eines solchen Verfahrens.

Die US-A-312 463 zeigt ein Verfahren nach dem Oberbegriff des Anspruchs 1.

Ein Verfahren sowie eine zugehörige Vorrichtung sind aus der Patentanmeldung EP 0 644 025 A1 bereits bekannt, bei der zwei dosierende Förderpumpen die einzelnen Werkstoffe in eine einzige Mischeinrichtung fördern in der Weise, daß ein Antriebsorgan einer ersten Förderpumpe mit einem konstanten Strömungsdruck beaufschlagt und der Strömungsdruck des ein zweites Antriebsorgan beaufschlagenden Antriebsfluids durch Stellbefehle einer Regeleinrichtung jeweils so eingeregelt wird, daß die Durchfluß-Meßwerte der von den Förderpumpen gerierten Förderströme in einem vorgebbaren, der Regeleinrichtung als Sollwert aufschaltbaren Verhältnis zueinander stehen.

Während bei einer relativ langsamen Förderung der Werkstoffe eine solche Regelung tatsächlich deren homogene Vermischung sicherstellt, kann es bei relativ hohen Fördergeschwindigkeiten zu Inhomogenitäten im geförderten Mischgut kommen, die Schwierigkeiten bei der technischen Anwendung hervorzurufen geeignet sind.

Darüber hinaus hängt die Funktionstüchtigkeit der Regelung wesentlich von Druckmessungen und -regelungen im Stromkreis des Antriebsfluids ab, die eichbare und über lange Zeit stabil arbeitende Meßgeräte für die auftretenden Drücke erfordern. Die Meßwerte aus diesen Druckmessungen müssen dabei mit Meßwerten für die von den Stellkolben zurückgelegten Wege verknüpft werden, zu deren Ermittlung Weg-Sensoren an den Stellzylindern abgebracht sind, die von den Stellkolben selbst oder von mit diesen verbundenen hin- und hergehenden Bauteilen angesteuert werden. Die Meßwerte von Druck und Weg sind dann noch rechnerisch miteinander zu verknüpfen, um daraus die Ist-Werte für die Förderströme aus den Förderpumpen und daraus das aktuelle Mischungsverhältnis der dem Mischer zugeführten Werkstoffe zu gewinnen. Insbesondere für die in der Regel mechanische Messung der Drücke ist mit Zeitverzögerungen zu rechnen. Es ist deshalb nicht sichergestellt, daß die Werkstoffe kontinuierlich zu einer homogenen Mischung verarbeitet werden, die stets das gewünschte Mischungsverhältnis aufweist. Vielmehr lassen sich in der fertigen Mischung manchmal lokale Heterogenitäten und Abweichungen vom Mischungsverhältnis nicht vermeiden.

Es ist auch bereits bekannt, die Förderung der Werkstoffe mittels Förderpumpen durchzuführen, deren jede einzelne von einer hydraulischen Stelleinheit angetrieben wird und bei denen jeweils die Strömung des in der Stelleinheit wirksamen Antriebsfluids von einem Steuerventil anpaßbar ist, das von einem Proportional-Regler gesteuert wird. Obwohl hierbei hohe Förderdrücke - und -leistungen leicht bewältigt werden, kann die Anordnung eine in einem weitem Förderbereich gleichmäßige Vermischung zu einem homogenen Mischgut oft nicht bewerkstelligen, weil die Stelleinheiten nicht so miteinander synchronisierbar sind, daß in verschiedenen Stelleinheiten die Förderrichtungen stets übereinstimmen und eine Richtungsumkehr der Stellkolben-Bewegung gleichzeitig stattfindet.

Man ist daher in naheliegender Weise auch schon dazu übergegangen, den Antrieb mehrerer Stelleinheiten von nur einer einzigen Antriebseinheit ausführen zu lassen, so daß die Förderpumpen nunmehr simultan betrieben werden und man tatsächlich eine homogene Verteilung der geförderten Werkstoffe in dem Mischungsgut erzielt. Voraussetzung für eine einwandfreie Funktion ist hierbei ein festes und unveränderbares Mischungsverhältnis. Will man das Mischungsverhältnis aber ändern, dann müssen die Förderpumpen gewechselt werden. Ein zusätzliches, verstellbares Getriebe schafft keine Abhilfe, wenn die technischen Parameter sehr präzise eingehalten werden sollen, ohne daß vorher nicht auch noch aufwendige Tests mit der Anlage gemacht werden.

Ein solches Getriebe stellt auch ein sogenannter Schwenkarm dar, mit dem gelegentlich eine kinematische Verbindung zwischen den Stellkolben hergestellt wird und der so verstellt werden kann, daß das Verhältnis der mit den Stellkolben ausgeführten Arbeitshübe verändert werden kann; zumeist wird der (maximale) Arbeitshub eines der Stelleinheiten konstant belassen und der Arbeitshub der zweiten Stelleinheit verändert. Auch hier muß die Anlage nach jeder Änderung neu eingestellt werden; erschwerend kommt hinzu, daß mit derartigen Hebelgetrieben nur begrenzte Antriebs- und Förderleistungen verwirklicht werden können. Die Verstellung ist mit einem erheblichen Zeitaufwand verbunden.

Aus der EP-Patentschrift 0 116 879 B1 ist ein Verfahren einschließlich einer zugehörigen Vorrichtung bekannt, bei dem anstelle der Druckmeßwerte hingegen die Durchfluß-Meßwerte der Förderströme gemessen und als Zählimpulse einer Regeleinrichtung aufgeschaltet und die Fördervolumina der beteiligten Werkstoffe dabei so bestimmt werden, daß in einem ersten Mischer, dem Mischblock, ein gewünschtes Mischungsverhältnis angenähert wird; die fertige Mischung wird partieweise in einen zweiten Mischer, das Mischrohr, transportiert, aus dem sie dann stetig von einem Verbraucher entnommen werden kann. Es sind demzufolge zur Herstellung einer stetig geförderten Mischung mindestens zwei Mischer erforderlich.

Die Erfindung hat sich deshalb die Aufgabe gestellt, ein Verfahren sowie eine zugehörige Vorrichtung der eingangs näher bezeichneten Art so zu gestalten, daß eine kontinuierliche Mischung der Werkstoffe in einer einzigen Mischkammer und in einem vorgebbaren Mischungsverhältnis zueinander erfolgt, dessen Größe sich in einem Intervall bewegt, das allen Anforderungen gerecht wird; dabei soll ein durchweg homogenes Mischgut gewonnen werden. Eine einfache, robuste und kostengünstige Vorrichtung soll mit einer kostengünstigen Steuerung betreibbar sein.

Erfindungsgemäß wird die Aufgabe durch ein Verfahren gemäß den Merkmalen des Anspruches 1 gelöst.

Durch die Erfindung wird die Regelung der Mischungsverhältnisse stark vereinfacht, weil nunmehr lediglich noch die Arbeitshübe in den Stelleinheiten gemessen werden müssen, deren Verhältnis zueinander durch einen konstanten Arbeitshub einer ersten Stelleinheit und einen das Mischungsverhältnis definierenden, veränderbaren Arbeitshub der zweiten und jeder weiteren Stelleinheit gekennzeichnet ist. Weil dabei die Bewegungen der Stellkolben erfindungsgemäß simultan ablaufen und lediglich die Strömung des Arbeitsfluids durch die zweite und jede weitere Stelleinheit eingeregelt wird, ändert sich die Geschwindigkeit der Stellkolben in den Folge-Stelleinheiten. Für die Wegmessung der Kolbenhübe stehen bewährte Weg-Sensoren zur Verfügung, die bereits bei derartigen Verfahren angewendet werden.

Für die Durchführung des erfindungsgemäßen Verfahrens kann eine Vorrichtung verwendet werden, welche gemäß Anspruch 2 ausgebildet ist. Bei dieser sind zwei Stelleinheiten vorgesehen, die als doppeltwirkende Hydraulikzylinder ausgebildet und hydraulisch miteinander verbunden sind in der Weise, daß das unter dem Einfluß des Antriebsmotors aus der ersten Stelleinheit geförderte Antriebsfluid die zweite Stelleinheit gleichgerichtet antreibt. Hierbei fungiert demzufolge die erste Stelleinheit als Antrieb sowohl einer ihr zugeordneten Förderpumpe für einen ersten Werkstoff als auch als Antrieb der zweiten Stelleinheit und damit einer dieser zugeordneten zweiten Förderpumpe für einen weiteren Werkstoff, ohne daß die Stelleinheiten miteinander mechanisch verbunden worden sind; die oben geschilderten Nachteile einer solchen Verknüpfung sind hier vermieden. Auch auf einen separaten Antriebe für jede der Förderpumpen ist bei der erfindungsgemäßen Vorrichtung nicht zurückgegriffen worden. Deren Stelleinheiten sind allein hydraulisch miteinander gekoppelt, und es muß lediglich an der zweiten und eventuell jeder weiteren Stelleinheit für einen simultanen Verlauf der Kolbenhübe mit demjenigen an der ersten Stelleinheit gesorgt werden, wofür der Stand der Technik genügend Möglichkeiten bereithält. Solange das Antriebsfluid nicht verändert wird, erfolgt diese Einstellung nur einmal und muß erst korrigiert werden, wenn durch Leckagen Volumendifferenzen an dem Antriebsfluid eintreten.

Bei den erfindungsgemäß als doppeltwirkende Hydraulikzylinder ausgeführten Stelleinheiten kann eine hydraulische Verknüpfung in einfacher Weise dadurch hergestellt werden, daß die Zylinderräume der Stellzylinder beiderseits des jeweiligen Stellkolbens durch hydraulische Verbindungsleitungen wechselweise miteinander verbunden sind, die am besten im wesentlichen nichtabsperrbar ausgeführt sind: die Stellkolben werden auf diese Weise stets gleichsinnig belastet.

Das durch die zweite Stelleinheit geförderte Volumen des Arbeitsfluids wird dadurch beeinflußt, daß die Verbindungsleitungen durch eine hydraulische Steuerleitung miteinander verbunden sind und in der Steuerleitung eine regelbare Absperreinrichtung vorgesehen ist, wobei die Zweige der Steuerleitung miteinander vorzugsweise in einer hydraulischen Brückenschaltung in der Art einer Wheatstone-Brücke verknüpft sind und die Absperreinrichtung in dem Brückenzweig der Brückenschaltung angeordnet ist; die Absperreinrichtung ist zweckmäßig von einem Proportional-Regler in Abhängigkeit von dem Stellsignal aus dem Steuergerät steuerbar. Leckagen werden ausgeglichen und ein Puffer für Mengendifferenzen während der Regelung geschaffen, wenn in der Steuerleitung ein vorzugsweise nichtabsperrbarer Druckspeicher für überschüssiges Antriebsfluid vorgesehen ist.

Die Umkehrpunkte der hin- und hergehenden Stellkolben können in Übereinstimmung gebracht werden, wenn an mindestens einer Stelleinheit die Stellung des Stellkolbens bei anstehendem Antriebsfluid veränderbar ist.

Der Antriebsmotor ist hinsichtlich seiner Bauweise grundsätzlich nicht abhängig von der erfindungsgemäßen Vorrichtung. Es hat sich aber als besonders vorteilhaft herausgestellt, ihn mittels Druckluft zu betreiben. Damit ist es möglich, daß er in Abhängigkeit von der zwischen den Verbindungsleitungen herrschenden Druckdifferenz schaltbar ist, beispielsweise von einem in die pneumatischen Fluidleitungen für den Antriebsmotor gelegtes Wegeventil, das seinerseits von der Druckdifferenz schaltbar ist; auf diese Weise kann der Antriebsmotor nur aktiviert werden, wenn das Hydrauliksystem in Betrieb ist. In seinen Umkehrpunkten kann die Richtungsumkehr durch Berührungsschalter oder dergleichen gesteuert werden. Die Verwendung von Druckluft als Antriebsenergie ist besonders vorteilhaft (Explosionsschutz), wenn das erfindungsgemäße Verfahren beim Farbspritzen Anwendung findet.

Es ist zweckmäßig, wenn ein Antriebskolben des Antriebsmotors, der Stellkolben der ersten Stelleinheit und ein Dosierkolben der zu dieser gehörigen Förderpumpe miteinander starr verbunden sind, vorzugsweise durch Festkupplungen zwischen den jeweiligen Kolbenstangen.

Die Steuerung des Antriebsfluids kann mit einem in der Steuerleitung installierten Steuerblock aus vier Rückschlagventilen erfolgen, die so geschaltet sind, daß das Antriebsfluid aus einer Verbindungsleitung bei Überdruck gegen die jeweils andere Verbindungsleitung über die Absperreinrichtung in den Druckspeicher oder in die jeweils andere Verbindungsleitung, bei Unterdruck gegen die jeweils andere Verbindungsleitung hingegen aus dem Druckspeicher oder aus dem Ausgang der Absperreinrichtung eingespeist wird. Dazu kann die Steuerleitung im einzelnen aus je einem Zweig für die Verbindungsleitungen bestehen, und in jedem Zweig kann je ein Rückschlagventil für beide Strömungsrichtungen vorgesehen sein, wobei an die Rückschlagventile gleicher Strömungsrichtung eine gemeinsame Zu- oder Ableitung für das Absperrventil angeschlossen ist; der Druckspeicher kann durch einen Abzweig an die gemeinsame Ableitung angeschlossen sein.

Eine solche einfache Anordnung stellt die Steuerung des zweiten Stellantriebes mit ganz einfachen Mitteln sicher. Die Steuerglieder sind hier bewährte Bauteile einfacher Bauart mit hoher Lebensdauer, die außerdem bei einem Defekt schnell ausgewechselt werden können.

Es ist ohne weiteres möglich, daß die Stelleinheit in bekannter Weise mittels mehrerer Distanzbolzen an dem Antriebsmotor so angeflanscht ist, daß ein bewegtes Maschinenteil zwischen den Kolben des Antriebsmotors und der Stelleinheit sichtbar bleibt. Dieses Maschinenteil kann mit einem an ihm ortsfesten Weg-Geber ausgerüstet werden, der in einem an dem Antriebsmotor und/oder der Stelleinheit ortsfesten Weg-Sensor Meßsignale auslöst; eine solche Anordnung kann auch zwischen der Stelleinheit und der angeflanschten Förderpumpe vorgesehen sein. Es ist sehr günstig, wenn dabei als Weg-Sensor ein inkremental arbeitender Längenmeßstab verwendet wird. Derartige aus einem Weg-Geber und einem Weg-Sensor bestehende Meßwertgeber sind in vielen Abmessungen und mit einstellbaren Meßlängen handelsüblich.

Insgesamt ist es durch die Erfindung möglich geworden, daß die von dem Verbraucher an dem Mischer entnommene Mischung nicht nur weitgehend homogen ist, sondern auch in einem gleichbleibenden Verhältnis der Werkstoff-Anteile geliefert wird. Dabei werden gleichzeitig teure Sonderkonstruktionen für die verwendeten Bau- und Funktionselemente vermieden und stattdessen wird auf seit langem handelsübliche Bauteile zurückgegriffen.

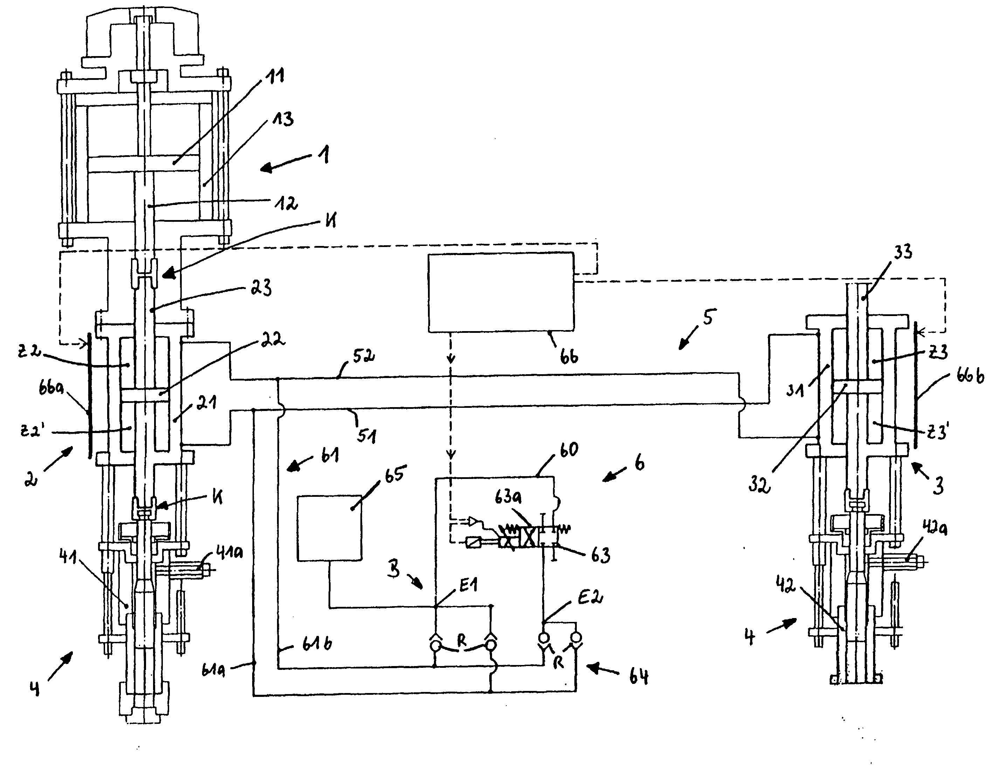

Die Erfindung wird nachstehend an Hand der Zeichnung an einem Ausführungsbeispiel näher erläutert. Die einzige Figur zeigt dabei eine erfindungsgemäße Vorrichtung in stark schematisierter Darstellung, mit der das erfindungsgemäße Verfahren besonders vorteilhaft ausführbar ist.

Eine Vorrichtung entsprechend der Erfindung besteht im wesentlichen aus einem pneumatischen Antriebsmotor 1, einer ersten an dem Antriebsmotor 1 angeflanschten hydraulischen Stelleinheit 2, einer zweiten hydraulischen Stelleinheit 3, die von der ersten Stelleinheit 2 aus angetrieben wird, sowie den zugehörigen Leitungen und Regeleinrichtungen.

Die Stelleinheiten 2,3 dienen zum Antrieb zweier Förderpumpen 4 zur dosierenden Förderung je eines fließfähigen Werkstoffes in eine in der Zeichnung nicht sichtbare Mischeinrichtung, insbesondere in einen statischen oder dynamischen Mischer herkömmlicher Bauart, der mit den Förderpumpen 4 über deren Ausgänge 41a,42a durch Schläuche oder Rohrleitungen verbunden werden kann.

Die Stelleinheiten 2,3 sind im wesentlichen aus je einem Stellzylinder 21,31 und einem Stellkolben 22,32 zusammengesetzt, wobei für die Stellkolben 22,32 Kolbenstangen 23,33 vorgesehen sind, die zur Führung der Stellkolben 22,32 in den Stellzylindern 21,31 dienen. Mit der Kolbenstange 23 wird außerdem der Antrieb des Stellkolbens 22 bewerkstelligt; sie ist zu diesem Zweck mit Hilfe einer Festkupplung K an eine zu einem Antriebskolben 11 gehörige Kolbenstange 12 angeschlossen. Der Antriebskolben 11 ist Bestandteil des pneumatischen Antriebsmotors 1, der als doppeltwirkender Kolbenmotor ausgebildet ist. Die entsprechenden, in seinem Kolbenzylinder 13 endenden Preßluftleitungen sind in der Zeichnung jedoch weggelassen; sie gehören nicht unmittelbar zu der Erfindung und sind fachüblich. In einer dieser Leitungen kann ein pneumatisches Wegeventil angeordnet sein, das die Schaltung des Antriebsmotors 1 nur in Abhängigkeit von einer ordnungsgemäßen Schaltung des hydraulischen Bereiches erlaubt.

Die Stelleinheiten 2,3 sind genauso wie der Antriebsmotor 1 doppeltwirkend ausgebildet; ihre jeweiligen Zylinderräume Z2,Z3 bzw. Z2',Z3' in den Stellzylindern 21,31 vor und hinter den Stellkolben 22,32 sind hydraulisch durch Verbindungsleitungen 5 miteinander verbunden. Dabei verknüpfen eine erste Verbindungsleitung 51 einen Zylinderraum Z2 der Stelleinheit 2 mit einem Zylinderraum Z3' der Stelleinheit 3 und eine zweite Verbindungsleitung 52 die beiden übrigen Zylinderräume Z2',Z3 miteinander. Bei in Förderrichtung antreibendem Antriebskolben 11 herrscht dabei in den Zylinderräumen Z2,Z3' der von dem Antriebskolben 11 ausgeübte Stempeldruck, während die anderen Zylinderräume Z2',Z3 einen wesentlich geringeren hydraulischen Druck aufweisen, weil dort von den Stellkolben 22,32 nur die reine Verschiebungsarbeit an dem Antriebsfluid zu leisten ist. Beim Gegenhub des Antriebskolbens 11 kehren sich die Druckverhältnisse entsprechend um.

Von den Verbindungsleitungen 5 sind Zweige 61a,61b einer Steuerleitung 61 an einer Steuereinrichtung 6 abgezweigt, die außerdem noch eine Absperreinrichtung 63, einen Steuerblock 64 und einen Druckspeicher 65 umfaßt. Eine elektronische Regeleinrichtung 66 steuert die Absperreinrichtung 63.

Die Absperreinrichtung 63 wird von einem Proportional-Regler 63a so bewegt, daß eine an die Stelleinheit 3 angeflanschte und von dieser angetriebene zweite Förderpumpe 42 ein gegenüber einer ersten Förderpumpe 41 veränderbares Fördervolumen in den Mischer einspeist. Zu diesem Zweck wird der durch die jeweilige Verbindungsleitung 5 von dem Stellkolben 22 bewegte Volumenstrom durch die Absperreinrichtung 63 aufgespalten in einen Anteil, der in einen Zylinderraum Z3,Z3' der zweiten Stelleinheit 3 eingespeist wird und die Absperreinrichtung 63 überhaupt nicht passiert, und in einen Anteil, der über die andere Verbindungsleitung 5 in die Stelleinheit 2 und ebenfalls in einen von dessen Zylinderräumen Z2,Z2' zurückgeführt wird.

Man benutzt auf diese Weise die Stelleinheit 2 gewissermaßen als Leitgerät mit konstantem Arbeitshub und konstantem Förderstrom aus der angeflanschten Förderpumpe 41, während die Stelleinheit 3 als Folgegerät einen variierbaren Arbeitshub ausführt, der den Förderstrom aus der zweiten Förderpumpe 42 und das jeweilige Mischungsverhältnis der dem Mischer zugeführten Werkstoffe bestimmt.

Die Zweige 61a,61b der Steuerleitung 61 bilden eine hydraulische Brückenschaltung B in der Art einer Wheatstone-Brücke, in deren Brückenzweig 60 die Absperreinrichtung 63 gelegt ist. Der durch den Brückenzweig 60 fließende Steuerstrom richtet seine Strömungsrichtung nach der Förderrichtung des Antriebskolbens 11, wobei jeweils die Gegenrichtung durch Rückschlagventile R gesperrt ist. Die Sperrichtung zweier an einem gemeinsamen Ende E1,E2 des Brückenzweiges 60 zusammenlaufender Stränge der Steuerleitung 61 ist jeweils gleich.

An den Brückenzweig 60 ist auch der Druckspeicher 65 angeschlossen, in den gegebenenfalls überschüssiges Arbeitsfluid eingespeist wird, das bei Bedarf wieder aus dem Druckspeicher 65 abfließt.

Die Stellwege der Stellkolben 22,32 in den Stelleinheiten 2,3 werden von Weg-Sensoren 66a,66b erfaßt, die ein Teil der Regelung 66 sind und deren Meßsignale in der Regelung 66 als Ist-Werte bereitstehen. Als Weg-Geber kann der jeweilige Stellkolben 22,32 selbst dienen; es kann aber auch ein gesonderter, an den Kolbenstangen 23,33 befestigter Weg-Geber verwendet werden.

Das durch Vergleich der aus den Weg-Sensoren 66a,66b gelieferten Meßsignale mit einem veränderbaren, an der Regelung 66 eingestellten Sollwert gewonnene Stellsignal wird aus der Regelung unmittelbar dem Proprotional-Regler 63a aufgeschaltet.

### Bezugszeichen:

- 1: Antriebsmotor
- 11: Antriebskolben
- 12: Kolbenstange
- 13: Kolbenzylinder
- 2: (erste) Stelleinheit
- 21: Stellzylinder
- 22: Stellkolben
- 23: Kolbenstange
- 3: (zweite) Stelleinheit
- 31: Stellzylinder
- 32: Stellkolben
- 33: Kolbenstange
- 4: Förderpumpe
- 41: (erste) Förderpumpe
- 41a: Ausgang
- 42: (zweite) Förderpumpe
- 42a: Ausgang
- 5: Verbindungsleitung
- 51: (erste) Verbindungsleitung
- 52: (zweite) Verbindungsleitung
- 6: Steuereinrichtung
- 60: Brückenzweig
- 61: Steuerleitung
- 61a,61b: Zweig
- 63: Absperreinrichtung
- 63a: Proportional-Regler
- 64: Steuerblock
- 65: Druckspeicher
- 66: Regeleinrichtung
- 66a,66b: Weg-Sensor

- B: Brückenschaltung
- E1,E2: Ende
- K: Festkupplung
- R: Rückschlagventil
- Z2,Z2': Zylinderraum in der ersten Stelleinheit
- Z3,Z3': Zylinderraum in der zweiten Stelleinheit

## Patentansprüche

1. Verfahren zum kontinuierlichen, synchronen Fördern von fließfähigen Werkstoffen mit jeweils einer Förderpumpe (4) in eine Mischeinrichtung, aus der die Mischung dieser Werkstoffe einem Verbraucher, beispielsweise einer Farbspritzpistole, zugeführt werden kann, wobei die Förderpumpen (4) jeweils mittels einer hydraulischen Stelleinheit (2,3) betätigbar sind, bei der ein Stellkolben (22,32) in einem Stellzylinder (21,31) geführt ist, und wobei die Stelleinheiten (2,3) in einem hydraulischen Stromkreis eines die Stellkolben (22,32) beaufschlagenden Antriebsfluids gelegen sind, wobei an einer ersten Stelleinheit (2) der Stellkolben (22) von einem Antriebsmotor (1) hin- und hergehend angetrieben wird und in dem hydraulischen Stromkreis ein im wesentlichen konstantes Arbeitsvolumen des Antriebsfluids vorgesehen wird,
**dadurch gekennzeichnet, daß**
die Hübe der Stellkolben (22,32) jeweils von an den Stellzylindern (21,31) angeordneten Weg-Sensoren (66a,66b) gemessen und die gewonnenen Meßsignale in eine Regeleinrichtung (66) zum Einregeln eines konstanten Mischungsverhältnisses der Werkstoffe eingespeist werden, in der Regeleinrichtung (66) die Differenz jeweils zeitgleicher Meßsignale aus zwei Stelleinheiten (2,3) als momentaner Ist-Wert mit einem zugehörigen soll-Wert verglichen und aus der Differenz von Ist- und Sollwert ein Stellsignal für den Mengenstrom des Antriebsfluids durch die zweite Stelleinheit (3) gebildet wird und die Umkehrpunkte für die hin- und hergehende Bewegung der Stellkolben (22,32) untereinander und mit dem Umkehrpunkt der Bewegung des Antriebsmotors (1) etwa gleichzeitig gewählt werden.

2. Vorrichtung zur Durchführung eines Verfahrens nach Anspruch 1, mit zwei Stelleinheiten (2,3), welche als doppeltwirkende Hydraulikzylinder ausgebildet und hydraulisch miteinander verbunden sind in der Weise, daß das unter dem Einfluß des Antriebsmotors (1) aus der ersten Stelleinheit (2) geförderte Antriebsfluid die zweite Stelleinheit (3) gleichgerichtet antreibt, die Zylinderräume (Z2,Z2';Z3,Z3') der Stellzylinder (21,31) beiderseits des jeweiligen Stellkolbens (22,32) durch hydraulische Verbindungsleitungen (5) wechselweise miteinander verbunden sind, **dadurch gekennzeichnet, daß** die Verbindungsleitungen (5) durch eine hydraulische Steuerleitung (61) miteinander verbunden sind und in der Steuerleitung (61) eine regelbare Absperreinrichtung (63) vorgesehen ist und die Absperreinrichtung (63) von einem Proportional-Regler (63a) in Abhängigkeit von dem Stellsignal aus der Regeleinrichtung (66) steuerbar ist.

3. Vorrichtung nach Anspruch 2, **dadurch gekennzeichnet, daß** die Zweige (61a,61b) der Steuerleitung (61) miteinander in einer hydraulischen Brückenschaltung (B) in der Art einer Wheatstone-Brücke verknüpft sind und die Absperreinrichtung (63) in dem Brückenzweig (60) der Brückenschaltung (B) angeordnet ist.

4. Vorrichtung nach einem der Ansprüche 2 oder 3, **dadurch gekennzeichnet, daß** in der Steuerleitung (61) ein vorzugsweise nichtabsperrbarer Druckspeicher (65) für überschüssiges Antriebsfluid vorgesehen ist.

5. Vorrichtung nach einem der Ansprüche 2 bis 4, **dadurch gekennzeichnet, daß** an mindestens einer Stelleinheit (3) die Stellung des Stellkolbens (32) bei anstehendem Antriebsfluid veränderbar ist.

6. Vorrichtung nach einem der Ansprüche 2 bis 5, **dadurch gekennzeichnet, daß** der Antriebsmotor (1) mittels Druckluft betrieben wird.

7. Vorrichtung nach Anspruch 6, **dadurch gekennzeichnet, daß** der Antriebsmotor (1) in Abhängigkeit von der zwischen den Verbindungsleitungen (5) herrschenden Druckdifferenz schaltbar ist.

8. Vorrichtung nach Anspruch 7, **dadurch gekennzeichnet, daß** in die pneumatischen Fluidleitungen für den Antriebsmotor (1) ein Wegeventil gelegt ist, das von der Druckdifferenz schaltbar ist.

9. Vorrichtung nach einem der Ansprüche 2 bis 8, **dadurch gekennzeichnet, daß** ein Antriebskolben (11) des Antriebsmotors (1), der Stellkolben (22) der ersten Stelleinheit (2) und ein Dosierkolben der zu dieser gehörigen Förderpumpe (41) miteinander verbunden sind, vorzugsweise durch Festkupplungen (K) zwischen den jeweiligen Kolbenstangen (12).

10. Vorrichtung nach einem der Ansprüche 2 bis 9, **dadurch gekennzeichnet, daß** in der Steuerleitung (61) ein Steuerblock (64) aus vier Rückschlagventilen (R) installiert ist, die so geschaltet sind, daß das Antriebsfluid aus einer Verbindungsleitung (51) bei Überdruck gegen die jeweils andere Verbindungsleitung (52) über die Absperreinrichtung (63) in den Druckspeicher (65) oder in die jeweils andere Verbindungsleitung (52), bei Unterdruck gegen die jeweils andere Verbindungsleitung (52) hingegen aus dem Druckspeicher (65) oder aus dem Ausgang der Absperreinrichtung (63) eingespeist wird.

11. Vorrichtung nach Anspruch 13, **dadurch gekennzeichnet, daß** die Steuerleitung (61) aus je einem Zweig (61a,61b) für die Verbindungsleitungen (5) bestehen und in jedem Zweig (61a,61b) je ein Rückschlagventil (R) für beide Strömungsrichtungen vorgesehen ist, wobei an die Rückschlagventile (R) gleicher Strömungsrichtung eine gemeinsame Zu- oder Ableitung für die Absperreinrichtung (63) angeschlossen ist.

12. Vorrichtung nach Anspruch 14, **dadurch gekennzeichnet, daß** der Druckspeicher (65) durch einen Abzweig an die gemeinsame Ableitung angeschlossen ist.

## Claims

1. A process for the continuous, synchronous delivery of fluid materials by means of a respective delivery pump (4) to a mixing device from which the mixture of these materials can be supplied to a consumer, for example a paint spray gun, the delivery pumps (4) each being actuable by means of a hydraulic control unit (2, 3) in which a control piston (22, 32) is guided in a control cylinder (21, 31), and the control units (2, 3) being placed within a hydraulic circuit of a drive fluid acting on the control pistons (22, 32), the control piston (22) in a first control unit (2) being driven back and forth by a drive motor (1) and a substantially constant working volume of the drive fluid being provided in the hydraulic circuit,
**characterised in that**
the strokes of the control pistons (22, 32) are each measured by displacement sensors (66a, 66b) arranged on the control cylinders (21, 31) and the measuring signals obtained are fed to a regulating device (66) for regulating a constant mixing ratio of the materials, the difference between in each case simultaneous measuring signals from two control units (2, 3) is compared as an instantaneous actual value with an associated set value in the regulating device (66) and a control signal for the flow rate of the drive fluid through the second control unit (3) is produced from the difference between the actual value and the set value and the reversal points for the back and forth movement of the control pistons (22, 32) are selected approximately simultaneously with one another and with the reversal point for the movement of the drive motor (1).

2. A device for carrying out a process according to Claim 1, having two control units (2, 3) which are constructed as double-acting hydraulic cylinders and are hydraulically connected to one another in such a way that drive fluid delivered from the first control unit (2) under the influence of the drive motor (1) drives the second control unit (3) in the same direction, the cylinder chambers (Z2, Z2'; Z3, Z3') of the control cylinders (21, 31) on both sides of the respective control piston (22, 32) are alternately connected to one another by hydraulic connecting lines (5), **characterised in that** the connecting lines (5) are connected to one another by a hydraulic control line (61) and a controllable blocking device (63) is provided in the control line (61) and the blocking device (63) may be controlled by a proportional controller (63a) depending on the control signal from the regulating device (66).

3. A device according to Claim 2, **characterised in that** the branches (61a, 61b) of the control line (61) are linked to one another in a hydraulic bridge circuit (B) in the manner of a Wheatstone bridge, and the blocking device (63) is arranged in the bridge branch (60) of the bridge circuit (B).

4. A device according to one of Claims 2 and 3, **characterised in that** a preferably non-blockable pressure store (65) for excess drive fluid is provided in the control line (61).

5. A device according to one of Claims 2 to 4, **characterised in that** the position of the control piston (32) in at least one control unit (3) may be altered when the drive fluid is present.

6. A device according to one of Claims 2 to 5, **characterised in that** the drive motor (1) is operated by means of compressed air.

7. A device according to Claim 6, **characterised in that** the drive motor (1) may be controlled depending on the pressure difference between the connecting lines (5).

8. A device according to Claim 7, **characterised in that** a directional control valve, which may be controlled by the pressure difference, is placed within the pneumatic fluid lines for the drive motor (1).

9. A device according to one of Claims 2 to 8, **characterised in that** a drive piston (11) of the drive motor (1), the control piston (22) of the first control unit (2) and a metering piston of the delivery pump (41) associated with said first control unit are connected to one another, preferably by fixed couplings (K) between the respective piston rods (12).

10. A device according to one of Claims 2 to 9, **characterised in that** a control block (64) comprising four non-return valves (R) is installed in the control line (61), said non-return valves being controlled such that, in the event of overpressure in relation to the in each case other connecting line (52), the drive fluid from one connecting line (51) is fed into the pressure store (65) or into the respective other connecting line (52) by way of the blocking device (63) and conversely, in the event of underpressure in relation to the in each case other connecting line (52), is fed out of the pressure store (65) or out of the exit of the blocking device (63).

11. A device according to Claim 13, **characterised in that** the control lines (61) each comprise a branch (61a, 61b) for the connecting lines (5) and a respective non-return valve (R) for both flow directions is provided in each branch (61a, 61b), a common supply or discharge line for the blocking device (63) being connected to the non-return valves (R) of the same flow direction.

12. A device according to Claim 14, **characterised in that** the pressure store (65) is connected to the common discharge line by a branch.

## Revendications

1. Procédé de transport continu, synchrone de matériaux fluides, avec respectivement une pompe d'alimentation (4) dans un dispositif de mélange, à partir duquel le mélange de ces matériaux peut être amené à un consommateur, par exemple un pistolet à peinture, les pompes d'alimentation (4) pouvant être actionnées respectivement au moyen d'une unité de réglage (2, 3) hydraulique, dans laquelle un piston de réglage (22, 32) est guidé dans un cylindre de réglage (21, 31), et les unités de réglage (2, 3) étant situées dans un circuit hydraulique d'un fluide d'entraînement alimentant les pistons de réglage (22, 32), le piston de réglage (22) étant entraîné en va-et-vient par un moteur d'entraînement (1) dans une première unité de réglage (2), et un volume de travail sensiblement constant du fluide d'entraînement étant prévu dans le circuit hydraulique,
**caractérisé en ce que**,
les levées des pistons de réglage (22, 32) sont mesurées à chaque fois par des capteurs de déplacement (66a, 66b) disposés sur les cylindres de réglage (21, 31), et les signaux de mesure obtenus sont délivrés à un dispositif de réglage (66) pour le réglage d'un rapport de mélange constant des matériaux, la différence des signaux de mesure chaque fois synchrones provenant de deux unités de réglage (2, 3) étant comparée dans le dispositif de réglage (66) comme valeur effective instantanée à une valeur de consigne correspondante, et à partir de la différence entre la valeur effective et la valeur de consigne, un signal de réglage est formé pour le flux massique du fluide d'entraînement par la seconde unité de réglage (3), et les points d'inversion pour le mouvement de va-et-vient des pistons de réglage (22, 32) étant choisis l'un en dessous de l'autre et approximativement simultanés au point d'inversion du mouvement du moteur d'entraînement (1).

2. Dispositif pour l'exécution du procédé selon la revendication 1, avec deux unités de réglage (2, 3), lesquelles sont configurées comme des cylindres hydrauliques à double effet et sont reliées hydrauliquement l'une à l'autre, de sorte que sous l'influence du moteur d'entraînement (1), le fluide d'entraînement transporté depuis la première unité de réglage (2) entraîne dans le même sens la seconde unité de réglage (3), les chambres de cylindre (Z2, Z2' ; Z3, Z3') des cylindres de réglage (21, 31) des deux côtés du piston de réglage respectif (22, 32) étant reliées entre elles alternativement par des conduits de raccordement hydrauliques (5), **caractérisé en ce que** les conduits de raccordement (5) sont reliés entre eux par une ligne de commande (61) hydraulique et qu'un dispositif de retenue réglable (63) est prévu dans la ligne de commande (61), et que le dispositif de retenue (63) est commandable par un régulateur proportionnel (63a) en fonction du signal de réglage provenant de le dispositif de réglage (66).

3. Dispositif selon la revendication 2, **caractérisé en ce que** les branches (61a, 61b) de la ligne de commande (61) sont connectées entre elles dans un circuit en pont (B) hydraulique à la manière d'un pont de Wheatstone, et **en ce que** le dispositif de retenue (63) est placé dans la branche du pont (60) du circuit en pont (B).

4. Dispositif selon l'une des revendications 2 ou 3, **caractérisé en ce qu'**un accumulateur de pression (65), de préférence non obturable, est prévu dans la ligne de commande (61) pour le fluide d'entraînement excédentaire.

5. Dispositif selon l'une des revendications 2 à 4, **caractérisé en ce que** la position du piston de réglage (32) en présence de fluide d'entraînement peut être modifiée sur au moins une unité de réglage (3).

6. Dispositif selon l'une des revendications 2 à 5, **caractérisé en ce que** le moteur d'entraînement (1) est actionné au moyen d'air comprimé.

7. Dispositif selon la revendication 6, **caractérisé en ce que** le moteur d'entraînement (1) peut être commuté en fonction de la différence de pression régnant entre les conduits de raccordement (5).

8. Dispositif selon la revendication 7, **caractérisé en ce qu'**une soupape à plusieurs voies, commutable par la différence de pression, est placée dans les conduits de fluide pneumatiques pour le moteur d'entraînement (1).

9. Dispositif selon l'une des revendications 2 à 8, **caractérisé en ce qu'**un piston d'entraînement (11) du moteur d'entraînement (1), le piston de réglage (22) de la première unité de réglage (2) et un piston doseur de la pompe d'alimentation (41) appartenant à celle-ci sont reliés entre eux, de préférence par des accouplements fixes (K) entre les tiges de piston respectives (12).

10. Dispositif selon l'une des revendications 2 à 9, **caractérisé en ce qu'**un bloc de commande (64) comprenant quatre soupapes antiretour (R) est installé dans la ligne de commande (61), lesquelles sont commutées de façon à ce que le fluide d'entraînement issu d'un conduit de raccordement (51) soit amené, en cas de surpression vis à vis de l'autre conduit de raccordement (52) respectif, via le dispositif de retenue (63) dans l'accumulateur de pression (65) ou dans l'autre conduit de raccordement (52), et par contre en cas de dépression vis-à-vis de l'autre conduit de raccordement respectif (52) à partir de l'accumulateur de pression (65) ou depuis la sortie de le dispositif de retenue (63).

11. Dispositif selon la revendication 13, **caractérisé en ce que** la ligne de commande (61) est composée à chaque fois d'une branche (61a, 61b) pour les conduits de raccordement (5), et dans chaque branche (61a, 61b) à chaque fois une soupape antiretour (R) est prévue pour les deux sens d'écoulement, une conduite d'amenée ou une conduite d'échappement pour le dispositif de retenue (63) étant raccordé aux soupapes antiretour (R) de même sens d'écoulement.

12. Dispositif selon la revendication 14, **caractérisé en ce que** l'accumulateur de pression (65) est raccordé par une dérivation à la conduite d'échappement commune.
